# EUROPEAN PATENT APPLICATION

(11) **EP 4 533 933 A1**
(43) Date of publication of application: **09.04.2025**
(21) Application number: 24196849.4
(22) Date of filing: 28.08.2024
(51) Int. Cl.: A01C 7/20, A01B 63/00, A01B 71/02, A01B 76/00, A01C 7/08

(54) **AGRICULTURAL IMPLEMENT HAVING A CONTROL PANEL**

(30) Priority: 02.10.2023 US 202363587209 P
(71) Applicant: Agco Corporation, Duluth, Georgia 30096 (US)
(72) Inventor: FIGGER, Robert, Hesston (US); BRINKER, Jarrett Lee, Hesston, 67062-0969 (US); FANSHIER, Benjamin Anson, Hesston, 67062-0969 (US)
(74) Representative: AGCO Intellectual Property Department

(57) **Abstract**

This disclosure relates to the control of the operating parameters or other settings of a towed or mounted tractor implement (100). A control panel (302) is carried by the implement frame (300), outside the tractor (150). It receives commands for controlling the implement directly at the vicinity of the implement, including at least the raising and lowering of a toolbar (301) of the implement.

## Description

### FIELD

Embodiments of the present disclosure relate generally to agricultural implements which are towed by or mounted to a tractor.

### BACKGROUND

Various agricultural implements are towed by a tractor, such as seeders, planters, fertilizers, tillers, weeders, *etc.*

Many of these implements are designed to be mounted to a toolbar which is fixed to the back of the tractor. Row units are attached to the toolbar, each row unit performing a ground processing function at the location of that row unit along the toolbar.

The toolbar can be raised and lowered, so that it has a position where the row units engage with the ground and a position where the row units are lifted so they may be inspected, serviced, or repaired.

Examples of towed implement are air seeders and planters, for applying seed or fertilizer, or both simultaneously, to a field. An air seeder or planter is for example used in combination with a tilling implement, both towed behind a tractor, to place seed and fertilizer into a furrow which is opened by the tilling implement. Air seeders and planters comprise one or more product tanks for holding product, generally seed or fertilizer or both. Air seeders and planters also typically include a dosing system for dispensing product from the tanks and a pneumatic distribution system for delivering the product from the tanks to the soil at local row units. This initial dosing system for example comprises an auger or roller.

The product tanks are for example pressurized with air from the pneumatic distribution system. The pneumatic distribution system for example uses a centrifugal fan to provide at least one air stream which flows through the pneumatic distribution system to separate manifolds at which seed boots deposit product in the soil. The seed boots are arranged in a line, to form rows of planted seeds.

In one typical design, product is first introduced to the air stream in the vicinity of the product tank by the dosing system, using a venturi in a plenum of the dosing system. Product is carried by the air stream through distribution lines to the seed boots, which function as distribution units. The seeds are singulated and metered typically using a seed metering disc with pockets or holes. The seed boots are mounted behind ground openers of the implement so that the product may be evenly delivered to the ground.

Seeding systems enable a user to control the different components, such as the pressure source to vary the delivery airflow. Depending on the planter speed and the type of seed, the operator will adjust the air flow to maintain a desired seed distribution. The seed metering is for example controlled automatically.

Typically, the various controllable settings of a towed implement, such as a seed delivery system as described above, including as the lifting and lowering of the toolbar on which the row units are mounted, are controlled using a control panel in the tractor cab (termed the ISOBUS virtual terminal, with reference to the ISOBUS communications standard for tractors and other equipment).

There are many problems that can occur while using a towed implement. Furthermore, the implement may need to be in a particular position or state of operation to enable effective troubleshooting. As a result, an operator may need to make multiple visits to the tractor cab to make adjustments to the towed implement while performing troubleshooting or making adjustments.

This results in an inefficient inspection or repair process.

### BRIEF SUMMARY

In some embodiments, an agricultural implement for transporting (e.g., towing or carrying) behind a tractor includes a frame configured to be attached to the tractor; a toolbar carried by the frame; a set of planter row units mounted on the toolbar, each configured to plant seeds at the location of the row unit; and a control panel mounted to the frame adjacent to the toolbar, the control panel comprising a user input configured to receive user commands for raising and lowering the toolbar.

This implement has a local control panel so that an operator can make adjustments to the implement while out of the tractor cab, such as raising and lowering the toolbar to which the row units are mounted. This avoids the need for the user to make repeated journeys to the tractor cab.

For example, a user may need to resolve an issue such as a plugged row, and will need to raise the toolbar to gain access to the row unit.

The user can attend to multiple issues in turn, raising and lowering the toolbar between successive repairs or maintenance operations, without needing to return to the tractor.

The control panel is for example located adjacent to the toolbar and facing rearward of the implement. Thus, it faces a user when the user is behind the toolbar, for example working on a row unit. The control panel is for example located above a row unit at the center of the toolbar. Thus, it is as near to the user as possible (on average) when working on the row units.

The implement may comprise a lighting system to illuminate the implement, wherein the control panel is configured to receive commands for controlling the lighting system.

Thus, the user can control lighting from the control panel, to assist in an inspection or maintenance of the implement, so does not need to return to the cab if the lighting is insufficient. The lighting system is for example used to increase visibility along the rows as well as up and down the platform. Depending on which way the lights are facing, it may be helpful to turn the lights off when lining up a tender and then turn them back on to see to climb the ladder.

The implement may comprise actuators and a controller, wherein the actuators and controller are connected to a controller area network (CAN) bus and wherein the control panel is connected to the CAN bus.

The control panel thus interfaces with components of the implement using the existing CAN bus which interconnects those components.

The controller is for example configured to send status information to a control system of the tractor. In this way, the normal control panel and display in the tractor is updated to reflect the changes in system configuration that have been implemented by the user while out of the tractor cab.

The control panel may optionally be configured to slide laterally along the frame.

The control panel may comprise a plurality of control panels carried by the toolbar.

The implement for example comprises a seed delivery system, wherein the row units comprise seed delivery units.

The implement (i.e., seed delivery system) may also include a storage vessel for storing seeds to be provided to the ground, and a flow control system for controlling the flow of seeds to the ground. The control panel is configured to receive commands which set control parameters for the flow control system.

Adjustment of the flow conditions for the seeds is then possible from outside the tractor cab.

The flow control system for example comprises an air blower for delivery seeds from the storage vessel to the row units, and the control panel is configured to receive commands for controlling the air blower.

A user may want to turn off the air blower in order to service a row unit or to check tanks or move seed between tanks, or just no longer want the noise of the air blower while doing other tasks.

The flow control system for example comprises a vacuum fan in each row unit fan for metering the seeds, wherein the control panel is configured to receive commands for controlling the vacuum fans. The user may need to open a metering unit to service it, and will need to turn off the fan to do so. The user may also turn off the fan simply to reduce the noise level while attending to another part of the implement.

Each row unit for example comprises a seed metering unit comprising a seed disc having compartments for holding individual seeds, wherein the vacuum fan is for retaining the seeds in the compartments.

The implement (*i.e*., seed delivery system in this example) may further comprise a second storage vessel for storing fertilizer and a second flow control system for controlling the flow of fertilizer to the ground, wherein the control panel is configured to receive commands for controlling the second flow control system.

The second flow control system may be turned off for a service or if a leak is found. The pump may also be be used to help load the seed delivery system by turning on the pump to suck product off a tender trailer.

The second storage vessel for example comprises a liquid fertilizer tank, and the second flow control system comprises a liquid pump. Alternatively, the second storage vessel may comprise a dry fertilizer tank, and the second flow control system comprises an air pump.

In certain embodiments, an agricultural system includes a tractor and an implement as described above towed or carried behind the tractor.

The tractor for example comprises an ISOBUS virtual terminal.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 shows a seed delivery system being towed behind a tractor;
FIG. 2 shows in schematic form an example of the pneumatic connections in a seed delivery system;
FIG. 3 shows simplified top view of an implement towed by a tractor;
FIG. 4 shows examples of actuator that can be controlled by the control panel;
FIG. 5 shows the seed delivery system of FIG. 1 with a control panel; and
FIG. 6 shows another example of a seed delivery system.

### DETAILED DESCRIPTION

The detailed description and specific examples, while indicating exemplary embodiments of the apparatus, systems, and methods, are intended for purposes of illustration only and are not intended to limit the scope of the claims. These and other features, aspects, and advantages of the apparatus, systems, and methods will become better understood from the following description, appended claims, and accompanying drawings. The figures are merely schematic and are not drawn to scale. The same reference numerals are used throughout the figures to indicate the same or similar parts.

This disclosure relates to the control of the operating parameters or other settings of a towed or mounted tractor implement. A control panel is located at the implement, outside the tractor. It receives commands for controlling the implement directly at the vicinity of the implement, including at least the raising and lowering of a toolbar of the implement.

The concepts underlying this disclosure may be applied to any agricultural implement which is towed behind a tractor or mounted to a tractor, and in particular one with row units which extend along a toolbar. The toolbar is raised and lowered to engage the row units with the ground or to lift them and disengage them from the ground. When lifted, they can be serviced, repaired, or inspected more effectively than when they are engaged with the ground.

The concepts will be explained with reference to a seed delivery system as one possible example of an agricultural implement. However, it should be understood that this is only one example.

There are many different types of seed delivery system. For large scale agriculture, the seed delivery system is towed behind a tractor and comprises a wide frame carrying a toolbar, defining a set of rows. The toolbar or portions thereof may be movable separate from the frame to keep the toolbar aligned with the ground. Each row has a row unit where the delivery of seeds into the ground takes place. In pneumatic systems, air flow is used to deliver seeds from a seed tank to the row units. The row units are mounted on the toolbar, which can be raised and lowered.

Some seed delivery systems volumetrically meter the seeds at the location of the seed tank, and then deliver the metered seeds to the row unit. The row unit may then simply comprise a seed boot. This arrangement is generally known as an air seeder.

Other seed delivery systems perform initial dosage of the seeds using a distribution unit at the location of the seed tank, and the row units have a receiving chamber which fills up and the row units create a flow of singulated seeds. When the receiving chamber is full, the air flow is interrupted, stopping flow of material into the receiving chamber. At the row unit, the seeds are singulated and delivered to the ground by a seed metering unit. This for example involves a rotary disc comprising seed cells into which individual seeds are received, and the disc is rotated (*e.g*., by an electric drive) to deliver seeds one at a time from the receiving chamber. The row unit has a vacuum pump to deliver a vacuum pressure to hold the seeds in the seed cells, and the vacuum is released when the disc rotates to allow the seeds to drop one at a time from the rotary disc into a furrow. This arrangement is generally known as a planter.

Most seed delivery systems open a furrow into which the seeds are dropped. For this purpose, a trench opener (or furrow opener) is at the front of the row unit (in the direction of travel) before the seed discharge system, and a closing wheel is at the back of the unit to close the furrow.

This disclosure relates to any implement as mentioned above, and when applied to a seed delivery system it may be applied to any configuration of seed delivery system.

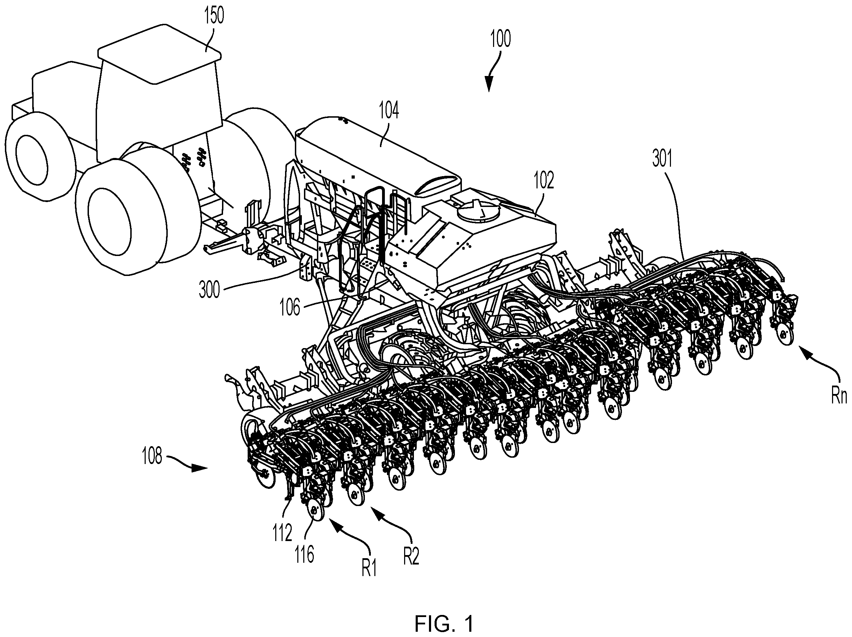

Simply by way of example, FIG. 1 shows a seed and dry fertilizer delivery system 100, being towed behind a tractor 150.

In this example, the seed delivery system comprises a first tank 102 for seeds and a second tank 104 for dry fertilizer carried by a frame 300. Each tank has its own air pump; for example, the air pump for the first tank 102 is shown at 106. The air pumps each deliver material from their respective tank to the delivery head 108 which comprises a series of row units R1, R2 ,..., Rn along a toolbar 301. The air pump generates a flow of air, and seeds are introduced into the airflow at a venturi. The air flows, with entrained seeds and dry fertilizer, are conveyed to the row units by pipe connections.

Each row unit is designed to open a furrow, deliver individual seeds into the furrow, and/or deliver fertilizer to or near the furrow. In some designs, the delivery head 108 may also close the furrow. Each row unit comprises a trench opener 116 and inside it there is a seed tube (seed boot) for delivering the seed. A fertilizer delivery nozzle 112 (*e.g.,* a shank) is also provided. Each row unit has a set of sensors for monitoring the functioning of the row unit.

This disclosure relates to the control of the operating parameters of the seed delivery system (and to the control of agricultural implements more generally).

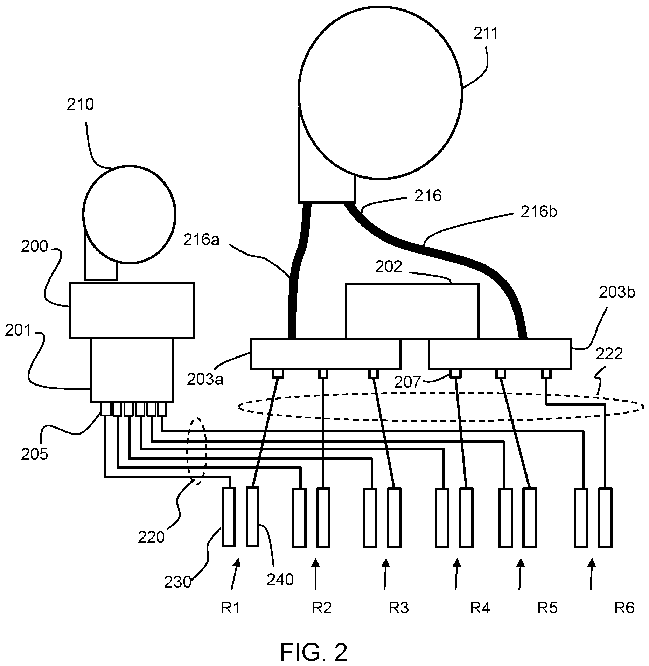

FIG. 2 shows in schematic form one possible arrangement of pneumatic connections for this example of seed delivery system.

The seed delivery system comprises a first storage vessel 200 for storing first material to be provided to the ground and a second storage vessel 202 for storing second material to be provided to the ground. The first storage vessel has a distribution unit 201. In the example shown, there are two dosing units 203a, 203b for the second storage vessel 202. In this example, the first storage vessel 200 is for storing seeds and the second storage vessel 202 is for storing fertilizer.

A first air pump 210 generates a flow for the delivery of seeds from the first storage vessel. A second air pump 211 delivers a flow for the delivery of fertilizer from the second storage vessel.

Each air flow is used to entrain a flow of material (seeds and fertilizer) from the respective storage vessel towards the row units, in known manner. In particular, the air flow passes through a venturi, for example venturis 205 of the distribution unit 201 and venturis 207 of the dosing units 203a, 203b, which creates an under-pressure to draw the seed or dry fertilizer into the air flow.

A first channel arrangement 220 is for delivering the seeds from the storage vessel 200 to the row units and a second channel arrangement 222 is for delivering the fertilizer from the storage vessel 202 to the row units. The row units, shown in simplified form as only rows R1 to R6 in FIG. 2, together constitute a first distribution arrangement for delivering the first material (seeds) to the ground and a second distribution arrangement for delivering the second material (fertilizer) to the ground. The first distribution arrangement comprises a set of units 230, with one such distribution unit 230 in each row unit. Each unit 230 comprises a seed metering system and a seed boot. The seed metering system comprises a seed disc, with the speed varied according to the dosing rate set by the operator. The second distribution arrangement comprises a set of distribution units 240, with one such distribution unit 240 in each row unit. Each unit 240 comprises a fertilizer delivery nozzle.

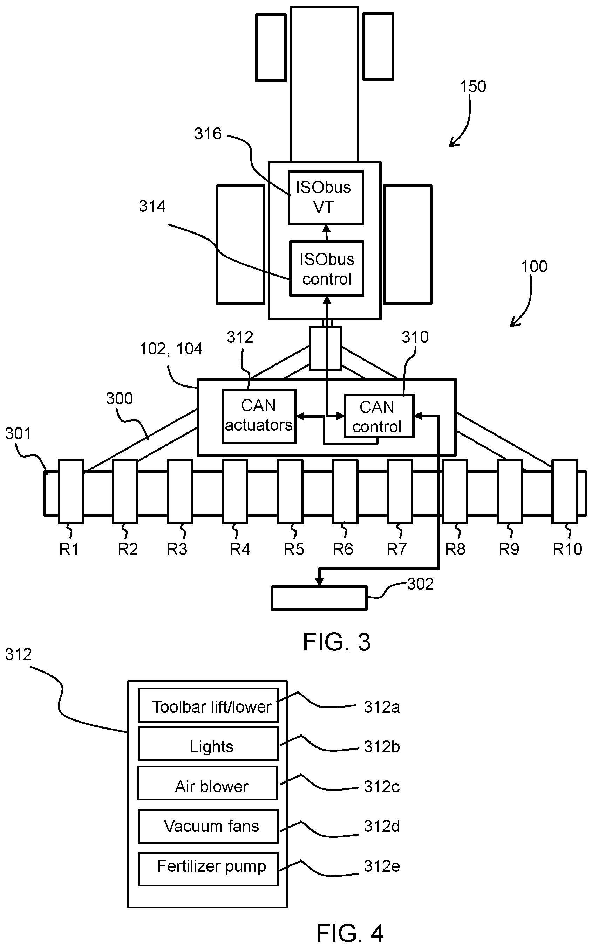

FIG. 3 shows a tractor 150 towing an implement 100, in this example comprising a seed delivery system as described above, in accordance with this disclosure.

The seed delivery system 100 comprises a frame 300 with a toolbar 301 on which the row units R1 to R10 are mounted. Each row unit is for metering the delivery of seeds into the ground, as explained above. More generally, the seed delivery system is any implement and the row units each perform a ground processing function at the location of the row unit.

A control panel 302 is located at the agricultural implement, outside the tractor. It receives user commands for controlling the settings and operation of the agricultural implement. The control panel is for example a touch screen display, which provides a representation of the various controllable functions of the implement, and their current settings (e.g., on/off or value settings for those actuators) so that a user can select a function to be controlled in an intuitive manner and can also see the current status of the implement.

The control panel 302 is accessible from behind the implement and is thus preferably mounted to the frame 300 adjacent to the toolbar 301 and facing rearward of the implement. Thus, it faces a user who is behind the implement. It is preferably located within reach of the user when the user is interacting with a row unit that is nearest to the control panel. The control panel is for example located at a fore-aft position level with the back of the implement or set forward of the back of the implement by up to 50 cm. Typically, the operator will inspect the row units from behind, because some moving parts are most visible and accessible from behind. Thus, locating the control panel at the back of the implement avoids the need for the user to walk a significant distance between the inspection location and location of the control panel. FIG. 3 schematically shows the control panel near the center of the rear of the toolbar, hence above a middle row unit or above a row unit near to the middle of the toolbar.

The control panel may be at a fixed position, but it could also be movable between different positions, for example being slidable along the length direction of the frame so that it can be located near to a row unit that is currently being inspected or worked on.

There may instead be a set of control panels, for example one at the middle of each arm of the toolbar so that the user can access a nearest control panel with a minimum of movement from the location at which an inspection or repair of a row unit is taking place.

A most basic function which can be controlled from the control panel 302 is the raising and lowering of the toolbar 301 on which the row units are mounted. The seed delivery system has an actuator system for this purpose.

The operator can make adjustments to the implement while out of the tractor cab, in particular raising and lowering the toolbar to which the row units are mounted. This avoids the need for the user to make repeated journeys to the tractor cab. For example, a user may need to resolve an issue such as a plugged row, and will need to raise the toolbar to gain access to the row unit. The user can attend to multiple issues in turn, and raise and lower the toolbar between successive repairs or maintenance operations, without needing to return to the tractor.

The implement has various actuators for controlling the various functions enabled by the implement, and these are schematically shown as actuators 312. They communicate using a Controller Area Network (CAN) with a CAN controller 310. The control panel 302 provides control instructions to the CAN controller 310 to control the various actuators.

A first example of actuator 312 is the actuator for raising and lowering the toolbar, as explained above.

A second example of actuator 312 is a lighting system to assist inspection of the implement. The lighting can assist in an inspection or maintenance of the implement. The lighting system is for example used to increase visibility along the rows as well as up and down the platform. Depending on which way lights are facing, it may be helpful to turn them off when lining up a tender and then turn them back on to see to climb the ladder.

Actuators are also provided for controlling the flow of seeds from the seed storage tank 102 to the row units and from the row units to the ground. Thus, a third example of actuator 312 is an air blower for controlling delivery of seeds from the seed tank 102 to the row units. The air blower is for example turned off in order to service a row unit or to check tanks or move seed between tanks. A fourth example of actuator 312 is the vacuum fan in each row unit for metering the seeds (for example for retaining seeds in a compartmentalized disc). The user may need to open a metering unit to service it, and will need to turn off the fan to do so. The user may also turn off the blower and/or the vacuum fans to save energy or to reduce the noise level while attending to another part of the implement.

Actuators are also provided for controlling the flow of fertilizer from a fertilizer tank 104 to the ground. Thus, a fifth example of actuator 312 is a liquid pump for liquid fertilizer or an air pump for dry fertilizer. The fertilizer flow control system is for example turned off for a service or if a leak is found. The fertilizer pump may also be be used to help load the seed delivery system by turning on the pump to suck product off a tender trailer.

FIG. 3 also shows that the tractor operates an ISOBUS system, with an ISOBUS controller 314 and an ISOBUS virtual terminal 316. The virtual terminal displays status information about the implements attached to the tractor and enables control of the those implements by communicating with the CAN controller 310 of those implements.

When settings are changed using the control panel 302, status information is sent by the CAN controller 310 to the ISOBUS control system 314 of the tractor so that the virtual terminal is updated to reflect the changes in system configuration that have been implemented by the user while out of the tractor cab.

FIG. 4 shows the set of actuators 312 mentioned above for a seed delivery system, comprising the toolbar lifting actuator 312a, lights 312b, seed air blower 312c, seed metering vacuum fans 312d and fertilizer pump 312e.

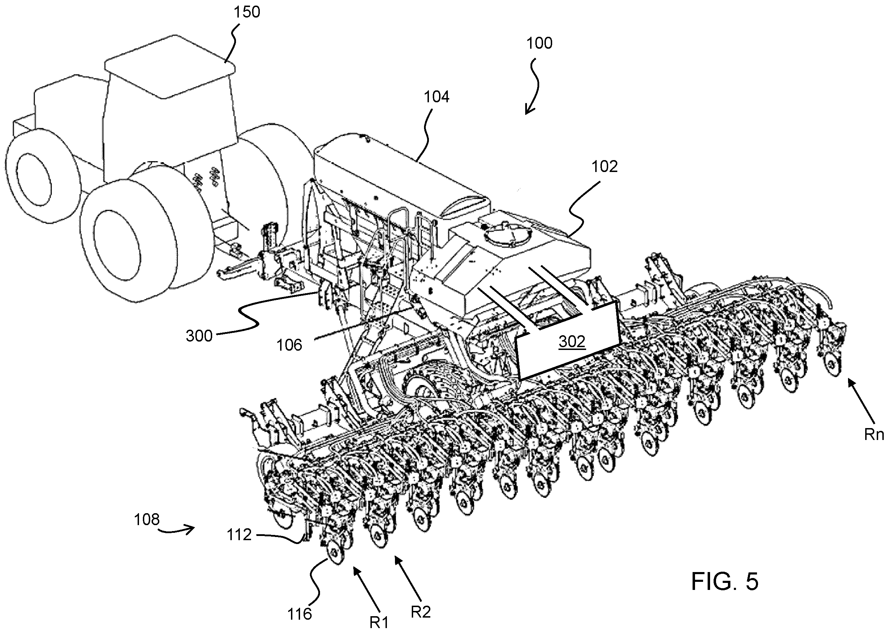

FIG. 5 shows a modification to the system of FIG. 1. The control panel 302 is mounted to the back of the tank 102. In FIG. 5, the control panel 302 is spaced from the tank 102 so that it is positioned at a suitable location for the user.

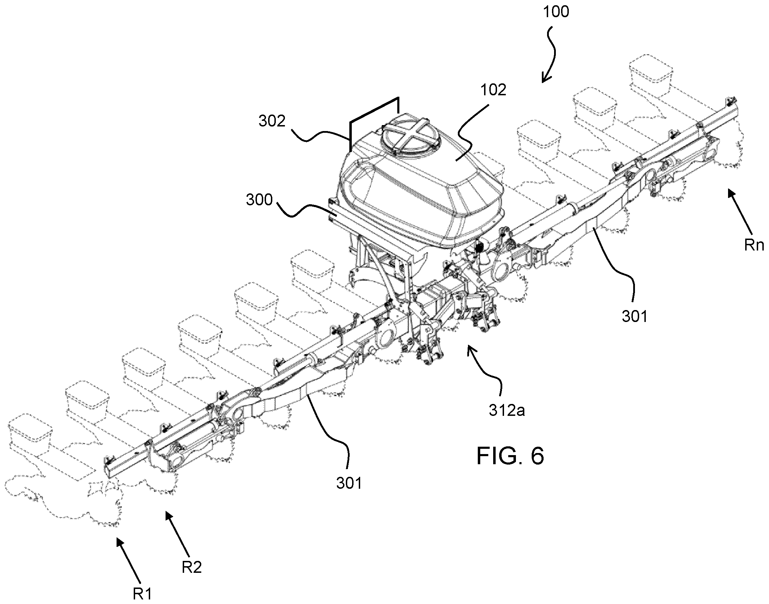

FIG. 6 shows a so-called stack-fold design, and a design in which the tank 102 is located further back so that the control panel 302 can be mounted directly against a rear face of the tank 102 as shown. In this example, there is only a single tank 102 for seeds. The second tank for fertilizer in the example above is optional. The tank 102 may be too high for mounting the control panel 302 to the tank 102, so the control panel 302 may for example be mounted along a walkway or ladder used to gain access to the tank 102, or to a frame supporting the tank 102.

FIG. 6 shows the toolbar 301 and generally shows the stack-fold mechanism and the actuator for lifting and lowering the toolbar as 312a. On a tractor-implement-management (TIM) enabled tractor, the three-point linkage of the tractor can be lifted and lowered as well as the arms of the toolbar.

Variations to the disclosed embodiments can be understood and effected by those skilled in the art in practicing the claimed invention, from a study of the drawings, the disclosure and the appended claims. The word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

## Claims

1. An agricultural implement (100) for transporting behind a tractor (150), comprising:
a frame (300) configured to be attached to the tractor;
a toolbar (301) carried by the frame;
a set of planter row units (R1, ..., Rn) mounted on the toolbar, each configured to plant seeds at the location of the row unit; and
a control panel (302) mounted to the frame adjacent to the toolbar, the control panel comprising a user input configured to receive user commands for raising and lowering the toolbar.

2. The implement of claim 1, wherein the control panel is located adjacent to the toolbar.

3. The implement of claim 1 or claim 2, wherein the control panel is facing rearward of the implement.

4. The implement of any one of claims 1 to 3, wherein the control panel is located above a row unit at the center of the toolbar.

5. The implement of any one of claims 1 to 5, further comprising a lighting system (312b) configured to illuminate the implement, wherein the control panel is configured to receive commands for controlling the lighting system.

6. The implement of any one of claims 1 to 5, comprising at least one actuator (312) and a controller (310), wherein the at least one actuator and the controller are connected to a controller area network (CAN) bus and wherein the control panel (302) is connected to the CAN bus.

7. The implement of claim 6, wherein the controller (310) is configured to send status information to a control system (314) of the tractor.

8. The implement of any one of claims 1 to 7, wherein the control panel (302) is configured to slide laterally along the frame.

9. The implement of any one of claims 1 to 8, wherein the control panel (302) comprises a plurality of control panels carried by the implement.

10. The implement of any one of claims 1 to 9, comprising a seed delivery system, wherein the row units comprise seed delivery units.

11. The implement of claim 10, further comprising:
a storage vessel (102) for storing seeds to be provided to the ground; and
a flow control system (312c, 312d) for controlling the flow of seeds to the ground;
wherein the control panel is configured to receive commands that set control parameters for the flow control system.

12. The implement of claim 11, wherein the flow control system comprises an air blower (312c) for delivery seeds from the storage vessel to the row units, and wherein the control panel is configured to receive commands for controlling the air blower.

13. The implement of claim 11 or claim 12, wherein the flow control system comprises a vacuum fan (312d) in each row unit for metering the seeds, wherein the control panel is configured to receive commands for controlling the vacuum fans.

14. The implement of any one of claims 10 to 13, further comprising a second storage vessel (104) for storing fertilizer and a second flow control system (312e) for controlling the flow of fertilizer to the ground, wherein the control panel is configured to receive commands for controlling the second flow control system.

15. An agricultural system, comprising:
a tractor;
the implement of any one of claims 1 to 14 towed or carried behind the tractor.
